# EUROPÄISCHE PATENTANMELDUNG

(11) **EP 1 282 222 A2**
(43) Veröffentlichungstag der Anmeldung: **05.02.2003**
(21) Anmeldenummer: 02005962.2
(22) Anmeldetag: 15.03.2002
(51) Int. Cl.: H02M 7/5387

(54) **Vorrichtung zur Erzeugung oder Steuerung eines Wechselstromes in wenigstens einer induktiven Last**

(30) Priorität: 04.08.2001 DE 10138502; 19.11.2001 DE 10156779
(71) Anmelder: NexPress Solutions LLC, Rochester, New York 14653-7001 (US)
(72) Erfinder: Schmidt, Ulrich, 24211 Preetz (DE); Zessin, Jörg, 24326 Ascheberg (DE)
(74) Vertreter: Lauerwald, Jörg

(57) **Zusammenfassung**

Die Erfindung betrifft eine Vorrichtung zur Erzeugung eines Wechselstromes mit einer Gleichstromquelle in wenigstens einer induktiven Last, insbesondere zur Ansteuerung eines Schrittmotors, vorzugsweise im Mikroschritt.

Des weiteren betrifft die Erfindung eine Vorrichtung für die Steuerung eines Wechselstromes in wenigstens einer induktiven Last, vorzugsweise für eine Vorrichtung der vorgenannten Gattung.

Der Erfindung liegt die Aufgabe zugrunde, Vorrichtungen der genannten Gattung bereitzustellen, die in kostengünstiger und funktionssicherer Weise, erlauben, gezielt den funktionellen Gegebenheiten Rechnung zu tragen.

Diese Aufgabe wird erfindungsgemäß gelöst durch eine Regelschleife und ein Stellglied für die Regelschleife, welches eine Einrichtung für eine komplex programmierbare Logik (CPLD; complex programable logic device) umfaßt.

Eine unabhängige Lösung der gestellten Aufgabe, zeichnet sich aus durch eine Regelschleife und ein Stellglied, welches unter Verwendung einer (universellen) Logikbeschreibung mittels Parameterkonstanten parametrisiert bzw. parametrisierbar ist.

## Beschreibung

Die Erfindung betrifft eine Vorrichtung zur Erzeugung eines Wechselstromes mit einer Gleichstromquelle in wenigstens einer induktiven Last, insbesondere zur Ansteuerung eines Schrittmotors, vorzugsweise im Mikroschritt.

Des weiteren betrifft die Erfindung eine Vorrichtung für die Steuerung eines Wechselstromes in wenigstens einer induktiven Last, vorzugsweise für eine Vorrichtung der vorgenannten Gattung.

Vorrichtungen der eingangs genannten Gattungen sind hinreichend bekannt.

Ein wichtiges Einsatzgebiet derartiger Vorrichtungen ist beispielsweise in digitalen, insbesondere elektrophotographisch arbeitenden Druckmaschinen. In einer solchen Druckmaschine sind jeweils mehrere Schrittmotoren mit unterschiedlichen Aufgaben zu finden. Dabei müssen diese Schrittmotoren für ihre jeweilige Aufgabe zum Teil sehr unterschiedliche Drehmomente bereitstellen, zum Beispiel je nach Einsatzzweck ein Drehmoment von etwa 0,15 N m oder ein Drehmoment von etwa 3,8 N m. Schrittmotoren mit derartig unterschiedlichen Drehmomenten müssen unterschiedlich angesteuert werden, weil beispielsweise bei einer Steuerung mit Pulsweitenmodulation (PWM) eine hohe Grundfrequenz für die PWM notwendig ist, da zu jedem Mikroschritt mindestens ein PWM-Puls erzeugt werden muß, andererseits aber hohe Induktivitäten, wie sie bei einem großen Drehmoment auftreten, dem Strom jedoch entgegen wirken, so daß bei Betrieb eines solchen Motors aus diesem Grund eine niedrige Frequenz benötigt wird.

Im Prinzip existieren zwei unterschiedliche methodische Ansätze zur Ansteuerung von Schrittmotoren, und zwar jeweils eines speziellen Schrittmotors mit spezifischer Aufgabe, nämlich auf der Basis von Software oder auf der Basis von Hardware.

Softwarelösungen sind relativ langsam und erfüllen nur sehr schwer die in dem betroffenen Bereich notwendigen Sicherheitsanforderungen.

Hardwarelösungen auf der Basis von spezifischen IC's unterliegen den vom Hersteller festgelegten Spezifikationen, so daß sie notwendigerweise auf den jeweiligen Anwendungsfall spezialisiert und festgelegt sind.

Beide Arten von Lösungen sind kostenträchtig, zumal, wie erwähnt, zum Beispiel sogar in einer einzigen Druckmaschine zahlreiche Schrittmotoren mit unterschiedlichen speziellen Aufgaben zu finden sind.

Der Erfindung liegt die Aufgabe zugrunde, Vorrichtungen der eingangs genannten Gattung bereitzustellen, die in kostengünstiger und funktionssicherer Weise, erlauben, gezielt den funktionellen Gegebenheiten Rechnung zu tragen.

Diese Aufgabe wird erfindungsgemäß gelöst durch eine Regelschleife und ein Stellglied für die Regelschleife, welches eine Einrichtung für eine komplex programmierbare Logik (CPLD; complex programable logic device) umfaßt.

Hierdurch ist mit Vorteil eine flexible Anpassung der Steuerung an die zu betreibende Last und an deren Funktion ohne Änderung der Schaltung, in der das IC implementiert ist, durch einfaches Umprogrammieren der Logik möglich. Die Erfindung vereinigt dadurch in gewisser Weise die Vorteile von Software und Hardware und vermeidet gleichzeitig deren Nachteile. Insbesondere kommt die einmal programmierte Logik einer fest verdrahteten Hardware gleich und gewährleistet deren Funktionssicherheit, ist dagegen aber für andere funktionelle Gegebenheiten in einfacher Weise umprogrammierbar.

Die erfindungsgemäße Lösung ist auch kostengünstig hinsichtlich Beschaffung und Wartung, weil beispielsweise eine weitgehende Standardisierung in einer einzigen Druckmaschine vorhandener Schrittmotoren und zugehöriger Steuerungen erfolgen kann. Dies wird besonders deutlich durch die unabhängige Lösung der gestellten Aufgabe, für die auch selbständiger Schutz beansprucht wird, wonach sich eine erfindungsgemäße Vorrichtung für die Steuerung eines Wechselstromes in wenigstens einer induktiven Last auszeichnet durch eine Regelschleife und ein Stellglied, welches unter Verwendung einer (universellen) Logikbeschreibung mittels Parameterkonstanten parametrisiert bzw. parametrisierbar ist. Auch die Logikbeschreibung kann danach in dem Sinne universell sein, daß sie im wesentlichen standardisiert ist und die Steuerung einfach nur durch jeweils einzugebende Parameterkonstanten für die jeweilige Funktion und Gegebenheit individualisierbar und entsprechend vorbereitbar ist. Dabei besteht also ein aus der Erfindung erwachsender Vorteil schon in der Parametrisierung selbst, wodurch Eigenheiten der jeweils speziellen Steuerung in derartigen Parametern konzentriert bzw. manifestiert und wiedergegeben werden.

Die Steuerung selbst erfolgt bevorzugt über eine Pulsweitenmodulation, wie bereits angesprochen, insbesondere für eine zwei-Phasen-Steuerung mit Mikroschritten.

Die bevorzugten Parameter und Parametrisierungen ergeben sich aus den Ansprüchen und erlauben eine Anpassung der Steuerung an die Bedürfnisse.

Wie bereits eingangs erwähnt, werden bei hohen Induktivitäten niedrige Frequenzen benötigt, obwohl an sich die Pulsweitenmodulation für Mikroschritte eine relativ hohe Frequenz erfordert. Mit Hilfe einer Parameterkonstante f_chop_cnt ist daher erfindungsgemäß vorzugsweise die Grundfrequenz der Pulsweitenmodulation einstellbar.

Wenn eine hohe Genauigkeit für den Strom in der Induktivität gefordert ist, muß die minimale Einschaltdauer so klein wie möglich sein. Auch hier widersprechen jedoch die Eigenschaften hoher Induktivitäten einer kleinen minimalen Einschaltdäuer. Auch diese minimale Einschaltdauer ist daher erfindungsgemäß bevorzugt durch eine Parameterkonstante Min_on_cnt einstellbar. Ebenso einstellbar ist vorzugsweise mit einer Parameterkonstanten Min_off_cnt die minimale Ausschaltdauer.

Bei hohen Frequenzen ist die Signallaufzeit im Rückkopplungspfad der Regelschleife nicht vernachlässigbar, die eine Totzeit in der Regelschleife bewirkt, die für den Betrieb der PWM-Steuerung bei hohen Frequenzen kompensiert werden muß. Es sind daher erfindungsgemäß bevorzugt über Parameterkonstanten Comp_dis_del_cnt und Comp_dis_len_cnt der Totzeitverzug in der Regelschleife und/oder die Dauer der Totzeit einstellbar.

Die erfindungsgemäße Vorrichtung steuert zum Beispiel, wenn nicht sogar typischerweise, den Strom in den beiden Motorwicklungen eines 2-Phasen-Schrittmotors. Es werden dazu die für die Ansteuerung eines H-Brückentreibers notwendigen Ausgangssignale abgegeben, so daß entweder eine Integrierte H-Brücke, oder für sehr hohe Ströme, eine aus diskreten Transistoren mit entsprechendem Treiber eingesetzt werden kann.

Ausführungsbeispiele, aus denen sich auch weitere erfinderische Merkmale ergeben, auf die die Erfindung in ihrem Umfang aber nicht beschränkt ist, sind in der Zeichnung dargestellt. Es zeigen schematisch:
- Fig.1: ein Blockschaltbild einer Motortreiberschaltung für einen 2-Phasen-Schrittmotor,
- Fig. 2: ein erfindungsgemäßes Stellglied einer Motortreiberschaltung gemäß Fig. 1 als Blockschaltbild,
- Fig. 3: eine Einrichtung zum timing des Stellgliedes gemäß Fig. 2 als Blockschaltbild,
- Fig. 4: eine Einrichtung zur Pulsweitenmodulation des Stellgliedes gemäß Fig. 2 als Blockschaltbild,
- Fig. 5: einen Phasenmustergenerator eines Stellgliedes gemäß Fig. 2 als Blockschaltbild und
- Fig. 6: einen Kurzschlußdetektor eines Stellgliedes gemäß Fig. 2 als Blockschaltbild.

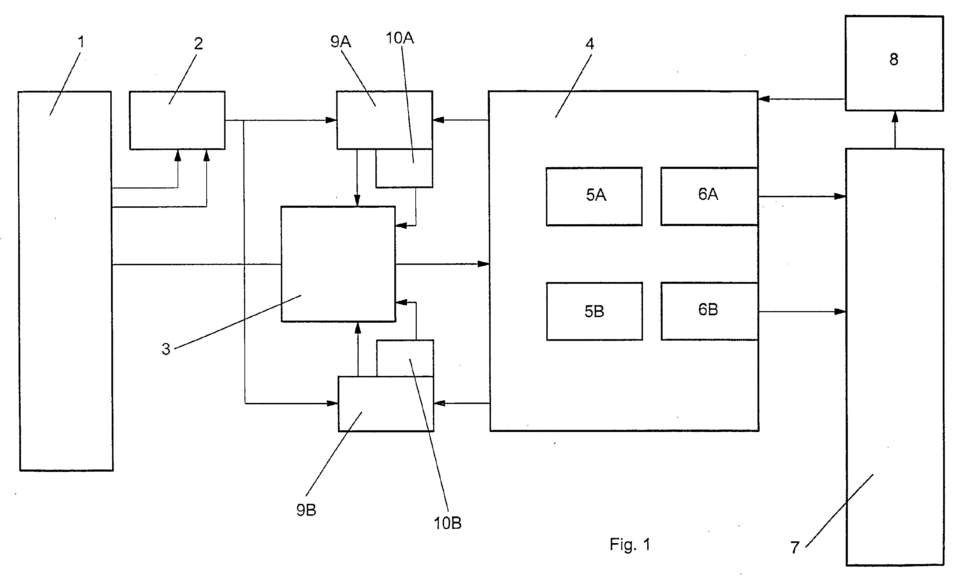

Fig. 1 zeigt ein Blockschaltbild einer Motortreiberschaltung für einen 2-Phasen-Schrittmotor. Die schematisch dargestellte Schaltung steuert den Strom in den beiden Motorwicklungen eines 2-Phasen-Schrittmotors.

Die Motortreiberschaltung hat ein Eingangs-Interface 1. Dieses ist verbunden mit einem Referenzenspeicher 2, in dem das Eingangs-Interface 1 Adressen und andere Daten ablegt, und mit einer Motorkontrolleinrichtung 3, die insbesondere die erfindungsgemäße, komplex programmierbare Logik enthält.

An die Motorkontrolleinrichtung 3 schließt sich der eigentliche Motortreiber 4 an, der zur Ansteuerung der beiden Phasen 1 und 2 bzw. A und B eines Schrittmotors jeweils einen H-Brückentreiber 5A bzw. 5B und H-Brücken 6A bzw. 6B umfaßt. Der Motortreiber 4 steuert mit seinen Ausgangssignalen den nicht näher dargestellten Schrittmotor über ein Ausgangs-Interface 7 an, welches Signale an eine Energieversorgungseinrichtung 8 für den Schrittmotor abgibt.

Die Energieversorgungseinrichtung 8 ist ihrerseits auch direkt mit dem Motortreiber 4 verbunden. Der Motortreiber 4 wiederum ist über Rückkopplungsorgane 9A bzw. 9B und über Kurzschlußzweige 10A bzw. 10B mit der Motorkontrolleinrichtung 3 verbunden, wodurch sich entsprechende Regelschleifen bilden.

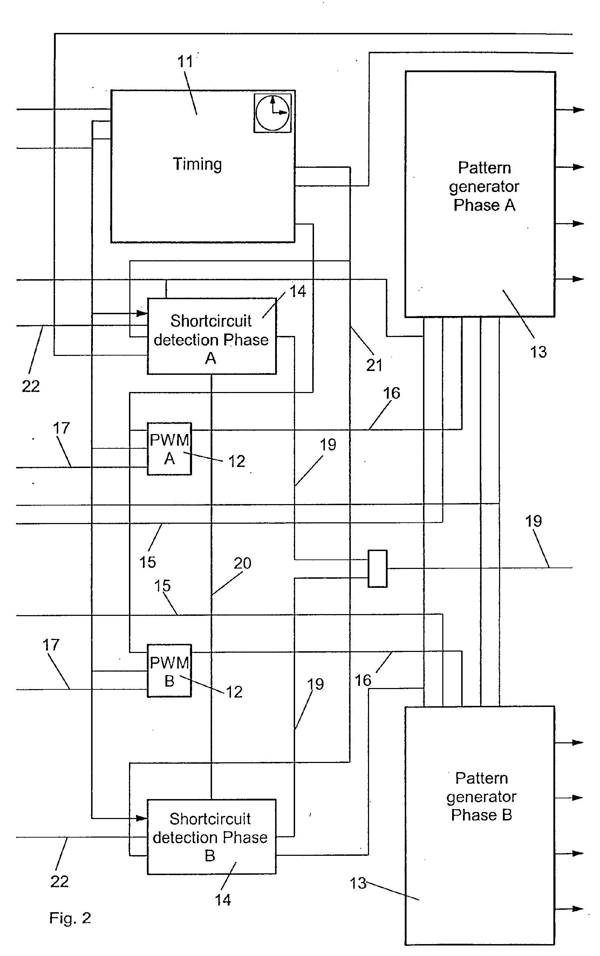

Die Fig. 2 ist durch in der Figur verwendete Abkürzungen und (englischsprachige) Worte im wesentlichen selbsterklärend, was auch für die nachfolgenden Figuren gilt. Es werden daher im folgenden nur einige der dargestellten Elemente angesprochen. Weitere Gegebenheiten sind aus den Figuren ergänzend selbst zu entnehmen.

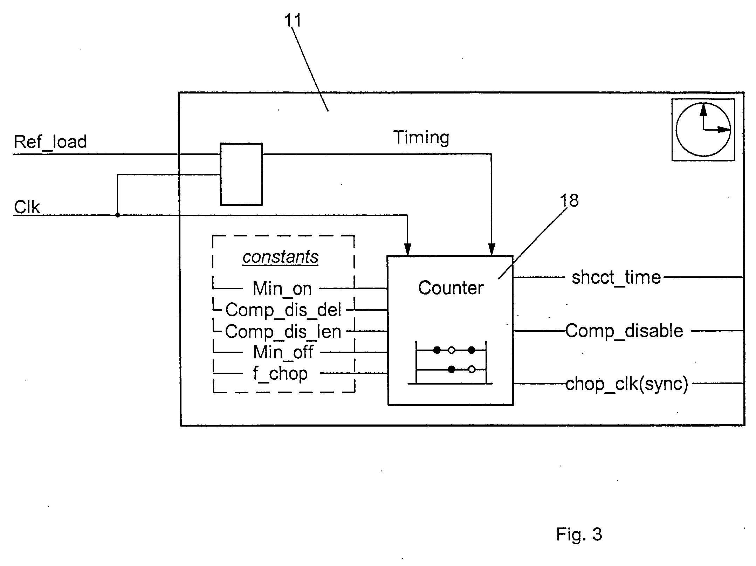

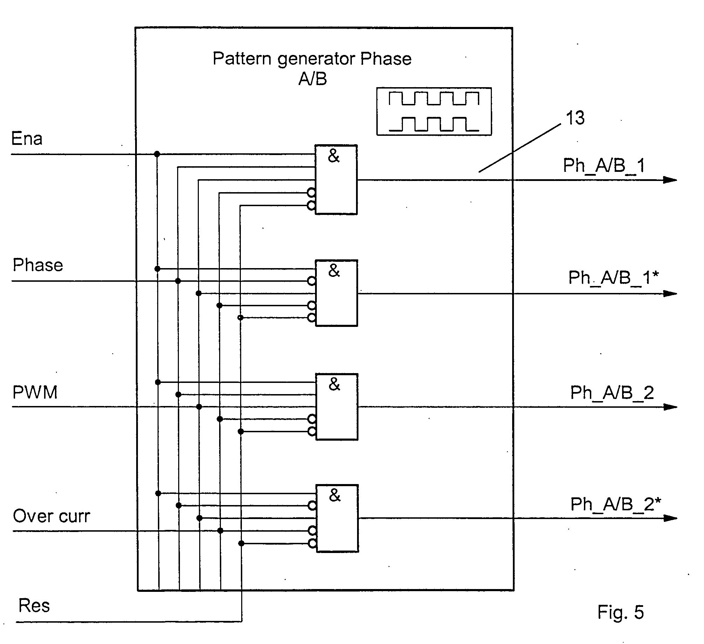

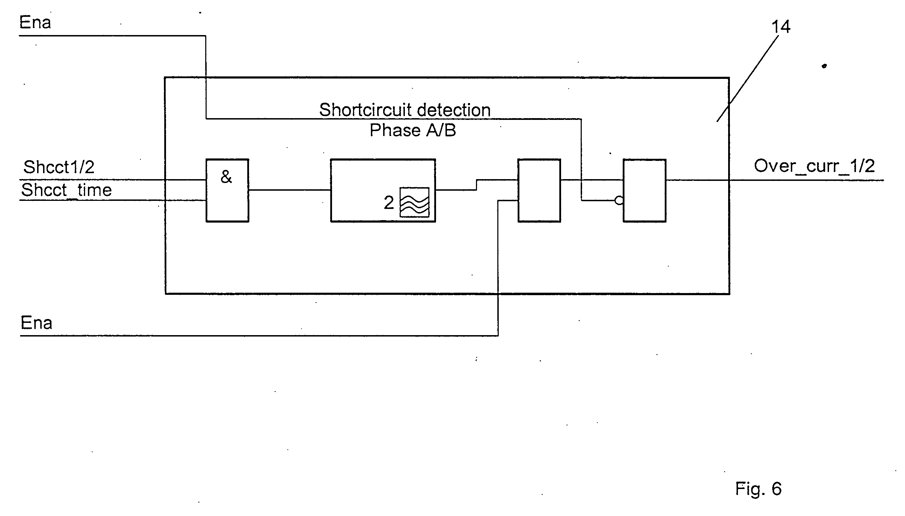

Fig. 2 erläutert im wesentlichen die Funktion einer erfindungsgemäß verwendeten; programmierbaren Logik als Stellglied einer Regelschleife für die Ansteuerung eines 2-Phasen-Schrittmotors. Dazu umfaßt dieses Stellglied insbesondere einen Timing-Block 11, Pulsweitenmodulatoren (PWM) 12 für die jeweiligen Phasen A und B, Phasenmustergeneratoren 13 für die Phasen A und B und Kurzschlußdetektoren 14 für die Phasen A und B. Diese Blöcke 11 bis 14 sind in den folgenden Figuren 3 bis 6 jeweils ebenfalls als Blockschaltbilder mit ihrem Inhalt etwas detaillierter dargestellt.

Die Ansteuerungssignale für die Motorwicklungen des Schrittmotors werden im wesentlichen letztlich von dem jeweiligen Phasenmustergenerator 13 abgegeben. Dazu wird zunächst einmal das jeweilige eigentliche Phasensignal der Phase 1 oder 2 bzw. A oder B über Leitungen 15 in den jeweiligen Phasenmustergenerator 13 eingegeben. Zudem werden aber auch aus den jeweiligen Pulsweitenmodulatoren 12 über Leitungen 16 Modulationssignale in den jeweiligen Phasenmustergenerator 13 eingegeben. Die Pulsweitenmodulatoren 12 befinden sich aber in einer jeweiligen Regelschleife und erhalten über Leitungen 17 Signale aus den Rückkopplungsorganen 9A bzw. 9B. Des weiteren sind die Pulsweitenmodulatoren 12 aber auch mit dem Timing-Block 11 verbunden, der sie mit seinen Zeitsignalen ansteuert und damit die Pulsweitenmodulation entscheidend für die jeweiligen Bedürfnisse, Gegebenheiten und Funktionen des jeweiligen Schrittmotors beinflußt bzw. vorgibt.

Wie aus Fig. 3 erkennbar ist, in der der Timing-Block 11 näher dargestellt ist, enthält dieser einen Zähler 18 für seine Zeitsignale, der letztlich erfindungsgemäß durch die in den Timing-Block 11 eingegebenen Parameterkonstanten (constants), abgekürzt "cnt" und namentlich Min_on, Comp_dis_del, Comp_dis_Ien, Min_off und f_chop, für den jeweiligen Einsatzzweck programmierbar ist.

Aus Fig. 2 ist zudem entnehmbar, daß Kurzschlußregelkreise über Kurzschlußdetektoren 14 für die Phasen A und B vorhanden sind. Die Kurzschlußdetektoren 14 sind miteinander an einer Kurzschluß-Stromleitung 19 angeschlossen und miteinander über eine Leitung 20 verbunden. Außerdem sind sie über eine Leitung 21 mit dem Timing-Block 11 verbunden. Über Leitungen 22 sind sie eingangsseitig in den Kurzschlußzweigen 10A bzw. 10B angeordnet.

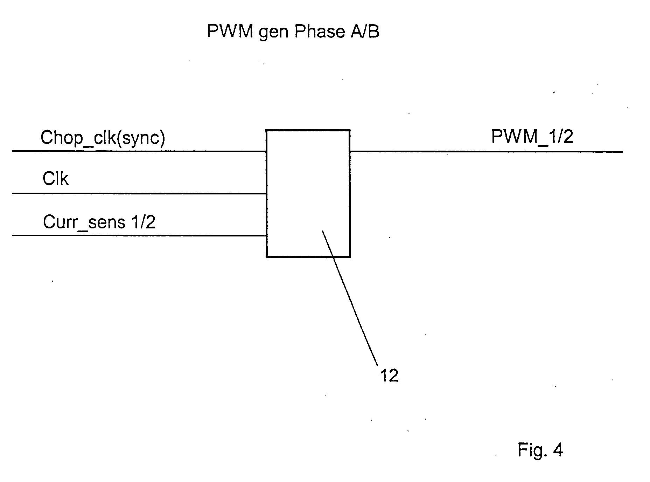

Die Figuren 4 bis 6, die einen Pulsweitenmodulator 12, einen Phasenmustergenerator 13 und einen Kurzschlußdetektor 14 näher zeigen, müssen nicht weiter erläutert werden, sondern sind, wie erwähnt, selbsterklärend.

## Patentansprüche

1. Vorrichtung zur Erzeugung eines Wechselstromes mit einer Gleichstromquelle in wenigstens einer induktiven Last, insbesondere zur Ansteuerung eines Schrittmotors, vorzugsweise im Mikroschritt, **gekennzeichnet durch** eine Regelschleife und ein Stellglied für die Regelschleife, welches eine Einrichtung für eine komplex programmierbare Logik (CPLD; complex programmable logic device) umfaßt.

2. Vorrichtung für die Steuerung des Stromes in wenigstens einer induktiven Last, vorzugsweise für eine Vorrichtung nach Anspruch 1, **gekennzeichnet durch** eine Regelschleife und ein Stellglied, welches unter Verwendung einer (universellen) Logikbeschreibung mittels Parameterkonstanten parametrisierbar ist.

3. Vorrichtung nach Anspruch 1 oder 2, **gekennzeichnet durch** eine Einrichtung für eine Pulsweitenmodulation (PWM) (12) eines Steuersignals.

4. Vorrichtung nach Anspruch 2 und 3, **gekennzeichnet durch** eine Parameterkonstante (f_chop_cnt) zur Einstellung der Grundfrequenz der Pulsweitenmodulation.

5. Vorrichtung nach Anspruch 2 und 3, **gekennzeichnet durch** eine Parameterkonstante (Min_on_cnt) zur Einstellung der minimalen Einschaltdauer.

6. Vorrichtung nach Anspruch 2 und 3, **gekennzeichnet durch** eine Parameterkonstante (Min_off_cnt) zur Einstellung der minimalen Ausschaltdauer.

7. Vorrichtung nach Anspruch 2 und 3, **gekennzeichnet durch** eine Parameterkonstante (Comp_dis_del_cnt) zur Einstellung des Totzeitverzuges in der Regelschleife.

8. Vorrichtung nach Anspruch 2 und 3, **gekennzeichnet durch** eine Parameterkonstante (Comp_dis_len_cnt) zur Einstellung der Dauer der Totzeit.

9. Vorrichtung nach einem der vorhergehenden Ansprüche, **gekennzeichnet durch** einen H-Brückentreiber (5A, 5B) mit wenigstens einer H-Brücke (6A, 6B).

10. Vorrichtung nach einem der Ansprüche 1 bis 8, **gekennzeichnet durch** diskrete Transistoren mit einem entsprechenden Treiber.
